(19) Europäisches Patentamt
European Patent Office
Office européen des brevets

(11) **EP 2 541 482 A1**

(12) **EUROPEAN PATENT APPLICATION**

(43) Date of publication:
**02.01.2013 Bulletin 2013/01**

(51) Int Cl.:
***G06Q 30/00*** (2012.01)

(21) Application number: **11305819.2**

(22) Date of filing: **27.06.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Dourthe, Cédric**<br>**06000 Nice (FR)**<br>• **Prezet, Hervé**<br>**06250 Mougins (FR)**<br>• **Baron, Romain**<br>**06600 Antibes (FR)** |
| (71) Applicant: **Amadeus S.A.S.**<br>**06410 Biot (FR)** | (74) Representative: **Decobert, Jean-Pascal**<br>**Cabinet Hautier**<br>**20, rue de la Liberté**<br>**06000 Nice (FR)** |
| (72) Inventors:<br>• **Berthaud, Sébastien**<br>**06600 Antibes (FR)** | |

(54) **System and method to combine redemption and converted commercial fares**

(57)     In one aspect thereof the exemplary embodiments provide a computer-implemented method that includes, in response to a request to redeem customer award units, processing data representing at least one commercial fare in conjunction with data representing at least one conversion rule so as to generate at least one converted redemption fare. The method further includes operating on the at least one converted redemption fare with a faring engine to output at least one travel solution calculated in award units.

Figure 3

**Description**

The exemplary embodiments of this invention relate generally to automated travel reservation systems and methods, such as those used for making airline travel arrangements and reservations.

BACKGROUND

Many airlines have instituted customer loyalty systems to reward those customers who make repetitive use of the same airline or group of airlines. Although differences exist between these various customer loyalty programs the rationale behind them can be characterized as follows: when the traveler subscribes to the customer loyalty program of one airline the traveler receives a "points" account. As considered herein a "point" can be considered to represent a unit of an award proposed in the scope of a customer loyalty program. Various other names can be used for the award unit (other than "points"). For example, the term "miles" is used quite often.

Each time the traveler purchases a flight on the airline some number of points is credited to the traveler's points account. The credited amount typically depends on several criteria such as the distance flown, the fare paid for purchasing the flight(s), and the origin and destination of the purchased flight(s). In return for accumulated points the airline offers awards. Different types of awards are commonly proposed. These awards can include the well-known flight awards, as well as upgrade services and other awards in the servicing area. Each award is associated with some "points" value defined by the airline. Once a traveler's points account is credited with a sufficient number of points the traveler can "redeem" some or all of the accumulated points for some desired award. The process of points redemption can be considered as a process whereby the member of the customer loyalty program "spends" all or some of the customer's accumulated points in order to receive an award, e.g., a free air travel. In that the redemption process is tied to the core business of the airline strict rules are normally applied to ensure that the redemption process does not imply a revenue loss.

Airlines can face certain challenges due to the success of their respective customer loyalty programs. For example, due to the widespread adoption of customer loyalty programs airlines are seeking ways to distinguish their respective programs from those offered by their competitors. Further, the large number of enrolled members of the customer loyalty awards programs leads to a high volume of points redemption which in turn makes it desirable for the airlines to use integrated and standard procedures for managing the points redemption and the award life cycle. In addition, it is desirable for the airlines to control a risk of loss of revenue represented by the potentially large redemption values due to the large number of enrolled customer loyalty awards members.

At present, there are basically two methods to associate a value in "points" to an award:

(a) for low points value awards with black-out periods, "redemption fares" with values in points being defined; and
(b) for high points value awards with greater availability, "commercial fares" where monetary (cash) amounts are used. The use of this latter method implies a conversion from some monetary amount to an equivalent value in points.

It is well-known that award flights can be subject to black-out periods corresponding to high travel activities. As such, award flight availability is typically different from standard flight availability.

In US 2006/0053052 A1, 03/09/2006, "Mileage purchase options for frequent traveler award redemption by rule", Baggett et al. disclose techniques for automatically determining frequent traveler award redemptions by rule. The frequent travel award redemption program is encoded in rules using predefined data structures based on fare by rule data structures. The techniques automatically determine a travel itinerary based on a query and the rules. Also included is a graphical user interface that displays a plurality of possible travel options for redemption using a frequent travel award. The rules include fields to determine co-pay options and for calculating mileage purchase options.

In US 2006/0053053 A1, 03/09/2006, "Co-pay options for frequency traveler award redemption by rule", Baggett et al. disclose techniques for automatically determining frequent traveler award redemptions by rule. The rules include fields to determine co-pay options and for calculating mileage purchase options.

Reference can also be made to US 2006/0053054 A1, 03/09/2006, "Frequent traveler award redemption by rule", Baggett et al.

SUMMARY

The foregoing and other problems are overcome, and other advantages are realized, in accordance with the embodiments of this invention.

In one aspect thereof the exemplary embodiments provide a computer-implemented method that comprises, in response to a request to redeem customer award units, processing data representing at least one commercial fare in conjunction with data representing at least one conversion rule so as to generate at least one converted redemption fare; and operating on the at least one converted redemption fare with a faring engine to output at least one travel solution calculated in award units.

In another aspect thereof the exemplary embodiments provide a data processing system that comprises at least one data processor and at least one memory connected with the data processor that stores computer software that is executable by the at least one data processor, whereby the data processor is caused to operate a redemption fare builder component to process data representing at least one commercial fare in conjunction with data representing at least one conversion rule so as to generate at least one converted redemption fare, and to operate a faring engine on the at least one converted redemption fare to output at least one travel solution calculated in award units.

<u>BRIEF DESCRIPTION OF THE DRAWINGS</u>

The foregoing and other aspects of the embodiments of this invention are made more evident in the following Detailed Description, when read in conjunction with the attached Drawing Figures, wherein:

- Figure 1A shows various elements of a conventional redemption fare flow.
- Figure 1B shows various elements involved in a conventional commercial conversion flow.
- Figure 2 is a high level block diagram of a unified award purchase flow system in accordance with the exemplary embodiments of this invention.
- Figure 3 shows in greater detail the inputs and outputs of the Redemption Fare Builder of Figure 2.
- Figure 4 shows the operation of the Redemption Fare Builder with one commercial fare and N money-to-points conversion rules to create N corresponding Redemption Fares.
- Figure 5A is a graph that plots Points (award units) versus Cash (monetary value) and shows the result of modeling a non-linear conversion rule as a sum of a linear conversion and a non-linear surcharge.
- Figure 5B is a graph showing a linear surcharge.
- Figure 5C is a graph that provides an example of a cash to miles conversion function.
- Figure 6 is a diagram showing the process flow in the creation of Redemption fares and rules using the Redemption Fare Builder and its two constituent components, namely a Fare properties aggregator component and a Rules aggregator component.
- Figure 7 is a simplified system-level block diagram showing various components that are suitable for implementing the exemplary embodiments of this invention.
- Figure 8 shows various elements of an exemplary embodiment of the invention providing a unified data flow derived from commercial fares and redemption fares.

<u>DETAILED DESCRIPTION</u>

In view of the foregoing discussion in the background section it can be noted that recent points redemption rules are composed of low points value awards that are subject to strict availability rules and black-out periods, as well as high points value awards subject to less restrictive availability rules.

Two methods of implementing these redemption mechanisms have been identified.

The first method takes advantage of existing air fare processing methods: i.e., instead of storing fares in a standard currency, airlines have defined a "points" currency and then store points fares in the existing system. This method may benefit from the added value of the use of the pre-existing system. However the method presents a major drawback since the points redemption policy tends to depend on flight-expected revenue, and the rules for redemption fares are eventually very similar to the rules already defined for commercial fares. One result is duplication in processing and storage requirements: one for commercial fares and one for redemption fares. Even if it were possible to take advantage of automated fare generation procedures applied to redemption fares (e.g., see in the above-referenced US 2006/0053054 ATPCo (Airline Tariff Publishing Company) Fare by Rule Category 25), the rules have to be duplicated resulting in excessive storage and processing complexity, as well as in complex maintenance being required.

The second method defines a conversion mechanism which automatically converts cash fares into an equivalent points value. One potential benefit of this approach is that it avoids duplicated data in the fare database. Additional data are maintained, containing rules to determine the conversion rate to use for converting a cash fare to a point fare. The criteria for selecting the conversion rule from cash to points can include: the Origin and Destination of the award journey; the time between the redemption and the departure of the award journey; the award travel dates; the award flight booking class; the fare basis of the cash fare; the cash fare amount; the Tier Level of the frequent traveler and the sale channels. Once a conversion rule is selected it yields the conversion rate to be applied.

In case the traveler does not have sufficient points, the traveler can purchase points. The rules for converting cash to points (e.g., see the above-referenced US 2006/0053052) can include, for a given award fare: (a) the customer must have at least a given points credit; (b) the rate at which the points can be purchased; and (c) the currency.

For value based redemption there is a unique conversion rate that is not recorded in the central system and that is not mixed with other fares.

One approach (Qantas.com) offers both methods: redemption fares associated with a low availability and converted commercial fares with a higher availability. However, these methods are implemented through two distinct processing flows.

There are several drawbacks to the foregoing approaches and techniques. For example, not all airlines want to use a strictly defined conversion rate. Further by example, the conventional approaches can require duplication of storage and/or duplication of fare structures. Further by example, there is no combination of classic awards and value-based awards. Also, problems can arise in an alliance of two or more carriers that use different methods for determining award values.

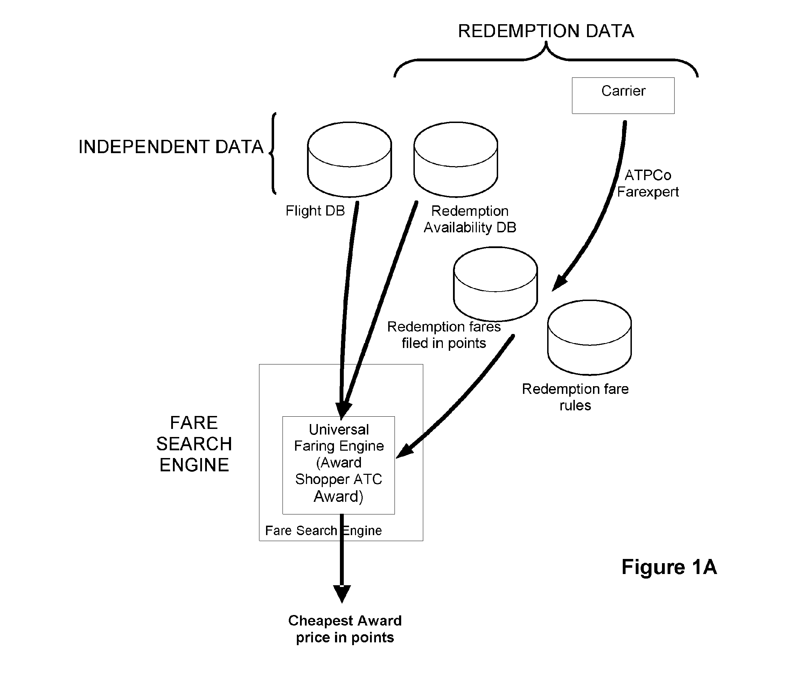

Basically, two data flows can be used but this approach has drawbacks. For example, a conventional redemption fares flow situation is shown in Figure 1A. In this case a fare search engine receives independent data from a flights database (DB) and redemption data from the carrier, a redemption availability DB, redemption fares (stored in points) and Redemption Fare Rules. The end result is the lowest award price in points.

Drawbacks to this approach include a low redemption availability, with black-out periods, and excessive duplicated storage requirements as the redemption fares in points and associated rules must be stored in addition to existing commercial fares and rules.

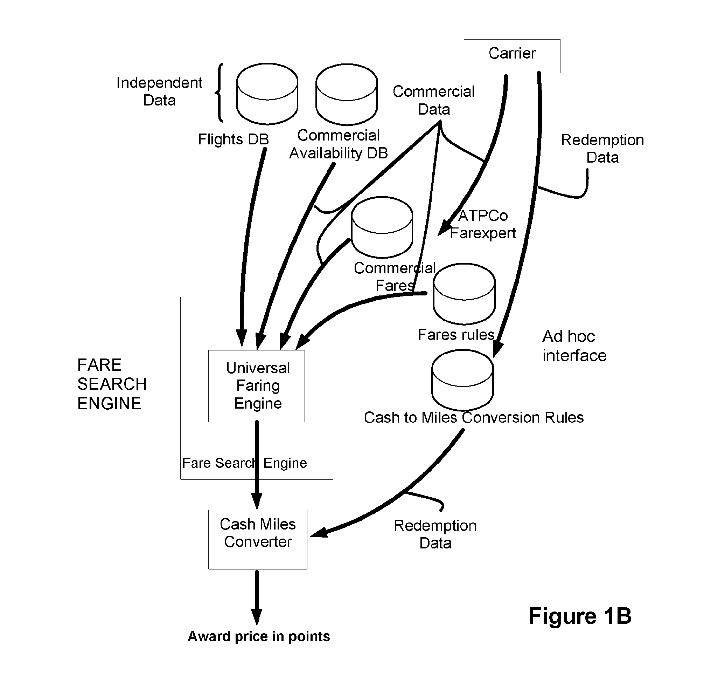

A conventional converted commercial fares flow is shown in Figure 1B. In this case a fare search engine (commercial universal faring engine) receives independent data from the flights DB as well as commercial data from a commercial availability DB, a commercial fares DB, the carrier and fare rules. The output of the universal faring engine is applied to a cash-to-miles converter, in combination with the output of a cash-to-miles conversion rule set that receives redemption-related data from the carrier. The output of the cash-to-miles converter is an award price in points.

Drawbacks to this approach include the fact that the conversion into points is performed after the faring engine and therefore after the search process is completed. Furthermore, the solution returned is the lowest cost solution in cash, converted into points, which may differ from the lowest cost solution in points, and as a result an optimum solution may not be found.

In view of the various problems discussed above the exemplary embodiments of this invention beneficially provide a unified system and method for combining redemption and converted commercial fares when pricing (i.e., assigning a value to) airline awards.

The exemplary embodiments of this invention provide in one aspect thereof a unified award purchase flow that allows the simultaneous consideration of all awards proposed by a company to a customer loyalty program member. These awards can include, but are not limited to, award flights priced using an award filed in the system; award flights priced using a value-based award dynamically created by the system and based on regular fares filed by a travel provider airline; award flights priced using a combination of the filed award and the value-based award; as well as services, merchandising, and upgrades.

The system and method described below enable a unified award purchase flow including both redemption and converted commercial fares. The exemplary embodiments of this invention allow the automated computation of the redemption value of any type of award, either related to travel (flights, in-flight services, upgrade services) or non-travel items (e.g., ancillary services, merchandising). A computation algorithm employs a combination, for the same journey, of redemption fares and converted commercial fares, and thus provides a lowest cost and accurate redemption value.

It should be noted at the outset that while the exemplary embodiments are described in the context of customer loyalty programs offered by airlines, in other embodiments the customer loyalty program can be offered by other types of travel provider entities including, for example, cruise ship operators, train service providers, bus service providers and automobile rental companies. Further, various aspects of the exemplary embodiments are not limited for use with customer loyalty programs offered by travel providers, but can be utilized by other types of organizations including, for example, hotels, casinos, shopping clubs and other organizations where it is desirable to offer current and future customers an incentive to deal with a specific organization.

As used herein a "commercial fare" can be considered as a conventional (classical) air fare defined as some monetary amount. A "redemption fare" can be considered as an air fare defined with an amount in points and applicable only for members of the applicable customer loyalty program. In addition, as used herein "rules" can be considered as being descriptive of conditions of application of air fares.

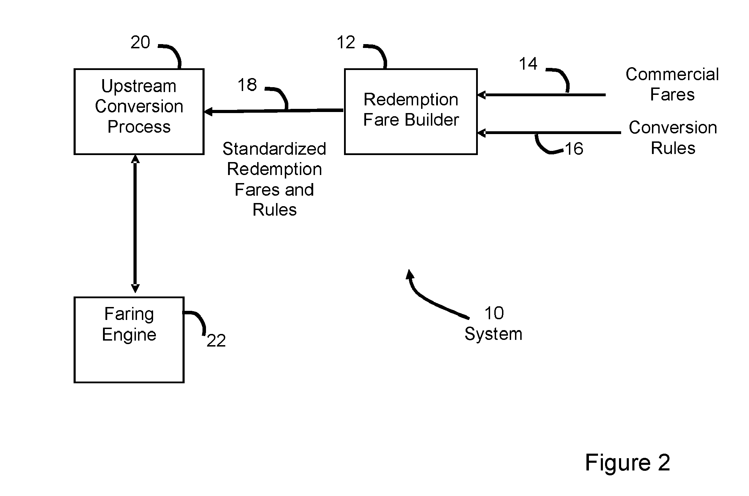

Referring to Figure 2, in the exemplary embodiments an awards redemption system 10 includes a Redemption Fare Builder 12 that dynamically converts commercial fares 14 and conversion rules 16 into standardized redemption fares and rules 18. The result is the generation of a generic data model that allows an upstream conversion process 20 to take advantage of a (possibly conventional) faring engine 22.

The system and method described herein in accordance with the exemplary embodiments of this invention enable the provision of a unified award purchase flow including both redemption and converted commercial fares, in addition to the automated computation of the redemption value of any type of award, either related directly to travel (flights, in-flight services, upgrade services) or not directly related to travel (other ancillary services as well as merchandising).

The computation is based on the combination of redemption fares and converted commercial fares for the same journey. Thus, the resulting computation provides a lowest cost and accurate redemption value.

In operation the faring engine 22 functions to explore a complex flight domain with many itineraries involving one or a multitude of flight segments. A single journey can be made up of one (non-stop) flight segment from point A to point B, or of more than one flight segment involving one or more intermediate points. In practice multiple pricing solutions exist for each itinerary as fares can be applied on any subset of flight segments and then combined together. For example, for a single journey with six flight segments the number of possible pricing solutions can be modeled so as to yield hundreds of possible pricing solutions.

The conversion rules from cash to points are often not linear. As a result the conversion of a total amount that results from the combination of several commercial fares can yield a result different than the sum of amounts converted separately into points.

One possible, but not preferred, solution can be to duplicate the fares for awards. However, this would result in the need to store and process significantly more data. For example, the amount of data could be multiplied at least by two, and possibly more due to non-linear conversion rules.

Another possible, but not preferred, solution would be to use an external conversion function to convert each commercial fare into points. However, this approach would imply that the system would need to determine for each flight segment if a converted commercial fare or a redemption fare is used, and then activate the converting function for each partition of the commercial fares (and for each journey). In practice this approach would require a large number of external function calls and would result in an excessive response time to a query made by a user.

The exemplary embodiments avoid these problems by the use of the Redemption Fare Builder 12 to perform the dynamic creation of redemption fares and rules from the commercial fares 14 and associated rules and the conversion rules 16.

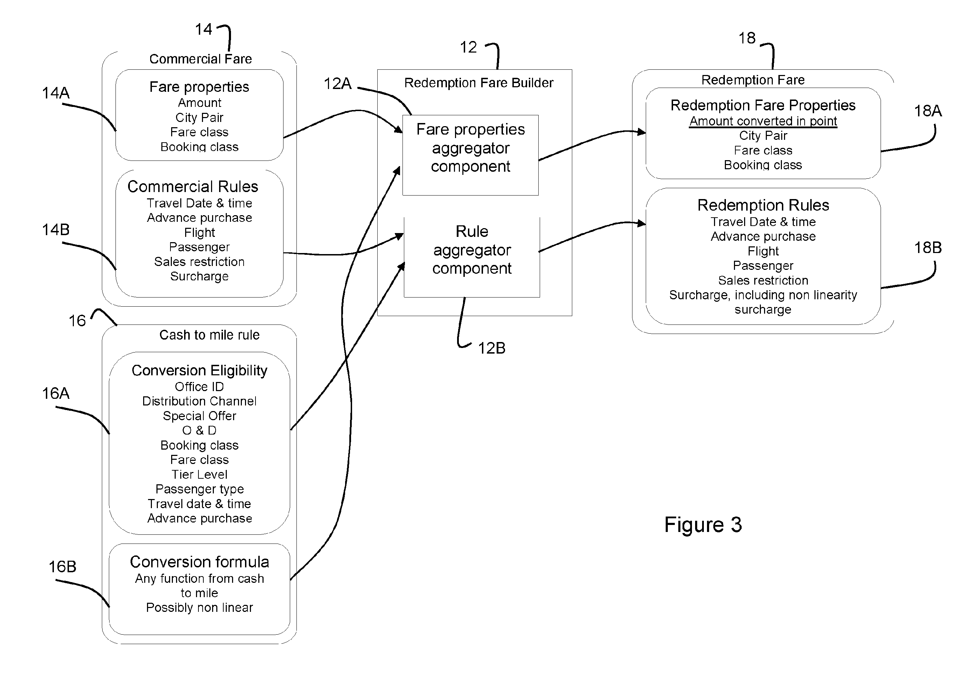

Referring to Figure 3, each commercial fare 14 can be divided into fare properties 14A and commercial rules 14B. Exemplary fare properties 14A can include a fare amount, a city pair, a fare class and a booking class. Exemplary commercial rules 14B can include travel date and time, advance purchase, flight, passenger, sales restriction and surcharge. The conversion rules 16 can include a cash-to-mile rule that can be divided into a conversion eligibility rule 16A and a conversion formula 16B. The conversion eligibility rule 16A can include a number of parameters, for example, an office identifier (ID), distribution channel, special offer, travel origin and travel destination (O&D), booking class, fare class, tier level, passenger type travel data and time and advance purchase. The conversion formula 16B can include any suitable function (possibly non-linear) to convert from cash to miles.

The Redemption Fare Builder 12 in this example includes a fare properties aggregator component 12A and a rule aggregator component 12B. The fare properties aggregator component 12A receives as inputs the fare properties 14A and the conversion formula 16B, while the rule aggregator component 12B receives as inputs the commercial rules 14B and the conversion eligibility 16A. Outputs of the Redemption Fare Builder 12 are provided to a Redemption Fare module 18 that includes Redemption Fare Properties 18A and Redemption Rules 18B. The Redemption Fare Properties 18A can include, for example, an amount converted to points for a city pair, fare class and booking class. The Redemption Rules 18B can include, for example, travel date and time, advance purchase, flight, passenger, sales restriction and a surcharge, possibly including a non-linear surcharge.

In operation the Redemption Fare Builder 12 aggregates the fare properties 14A and applies the conversion formula(s) 16B to build the Redemption Fare Properties 18A. The Redemption Fare Builder 12 also aggregates the commercial rules 14B and processes conversion eligibility 16A to create the redemption rules 18B. The Redemption Fare 18 can thus be defined from the Redemption Fare Properties 18A and the redemption rules 18B. In general, fare properties plus a conversion formula yields the Redemption Fare Properties 18A, while the fare rules plus conversion eligibility yields the Redemption Fare Rules 18B.

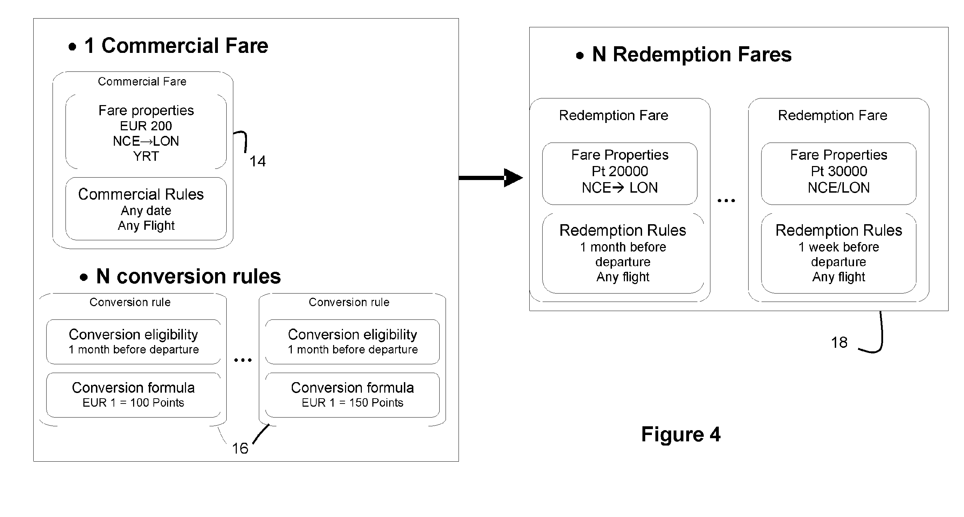

The process depicted in Figure 3 is dynamic. For example, one commercial fare 14 can lead to several redemption fares 18, and the Redemption Fare Builder 12 controls the increase in the data volume while reducing the possible number of combinations. Reference in this regard can be made to Figure 4, where it can be seen that one commercial fare 14 and N conversion rules 16 can result in N distinct redemption fares 18 being created. In this example the commercial fare properties amount may be 200 Euros, the city pair may be Nice to London, and the fare class may be YRT (one year ticket). The commercial rules 14B may be any date and any flight. A first of the N conversion rules may have a conversion eligibility of one month before departure, and a conversion formula of 1 Euro = 100 points, while another one of the N conversion rules may have a conversion eligibility of one week before departure, and a conversion formula of 1 Euro = 150 points. The resulting iteratively solved N redemption fares include one with fare properties of 20000 points for the city pair NCE-LON, and redemption rules of one month before departure/any flight, and another one with fare properties of 30000 points for the city pair NCE-LON, and redemption rules of one week before departure/any flight.

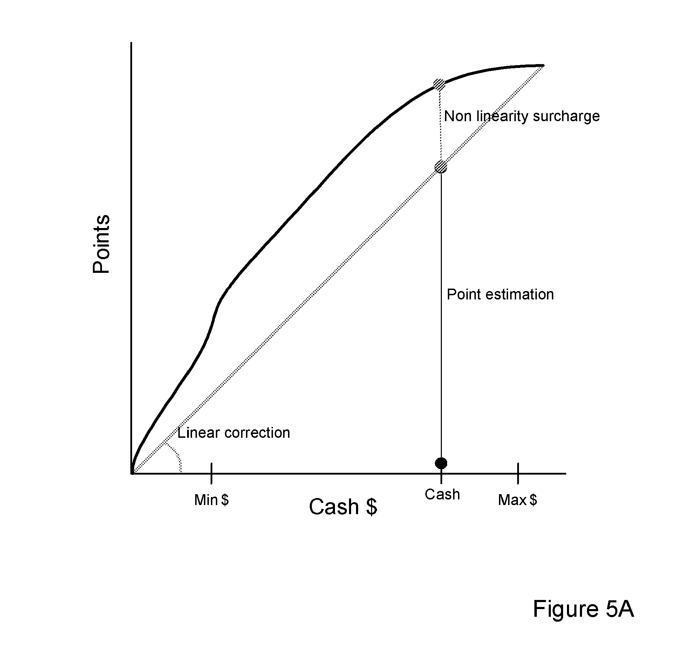

Referring to Figure 5A the complexity resulting from the non-linearity of conversion rules 16 is addressed by modeling it as the sum of a linear conversion and a non-linear surcharge. This model fits well with pre-existing faring engines that routinely cope with such non-linear surcharges.

Non-limiting examples of non-linear surcharges can be:

surcharges resulting from checks about fare construction and defined by IATA (International Air Transport Association) in order to ensure the consistency of itinerary pricing, e.g., HIP check (Higher Intermediate Point) which ensures that the total amount for a journey is not less than the applicable amount for a subset of the journey;

YQ/YR surcharges defined by airlines, e.g., fuel surcharges; and

ticketing fees defined by airlines, e.g., credit card fees.

In general, the conversion formula from cash to miles can be viewed as an increasing function defined on cash interval, e.g., C(c) defined on a cash interval [c0 c1].

The linear conversion is obtained by finding the affine function which is the closest to the conversion function but always inferior to the conversion function.

Referring to the linear conversion as L(c), and referring to A as the set of affine functions from cash to miles (m = a x c +b), then L(c) satisfies the following problem:

$$\forall c \in \left[c_0; c_1\right], L(c) \leq C(c)$$

$$\int_{c_0}^{c_1} \left(L(c) - C(c)\right)^2 = \min_{l \in A} \left( \int_{c_0}^{c_1} \left(L(c) - C(c)\right)^2 \right)$$

Any suitable method can be used for solving this problem, and the resolution using a Lagrange multiplier is works well.

Computation of linear surcharge:

Once the linear conversion is determined, the linear surcharge is defined by:

$$S(c) = C(c) - L(c).$$

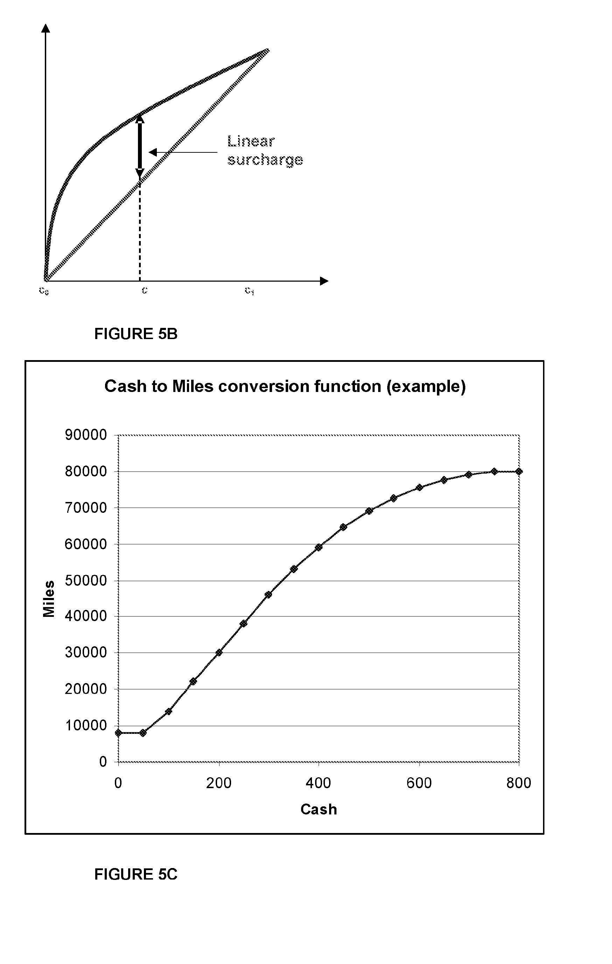

Referring to Figure 5B, by construction the linear surcharge is always positive.

Figure 5C is a simplified graph showing an example of conversion function from cash to miles and shows a typical shape of the function.

In general, for the non-linearity surcharge the conversion rule is defined per origin and destination and is often non-linear. Note that the summation of the converted fares is not equal to the conversion of the summation of the fares. The conversion rule is transformed into a linear conversion rate plus the non-linearity surcharge. In a generic data model the fare amount is converted using the linear conversion, the non-linearity surcharge is add to the redemption rules. The non-linearity surcharge follows a surcharge standard model which thereby allows integration into a variety of products, including shopping products.

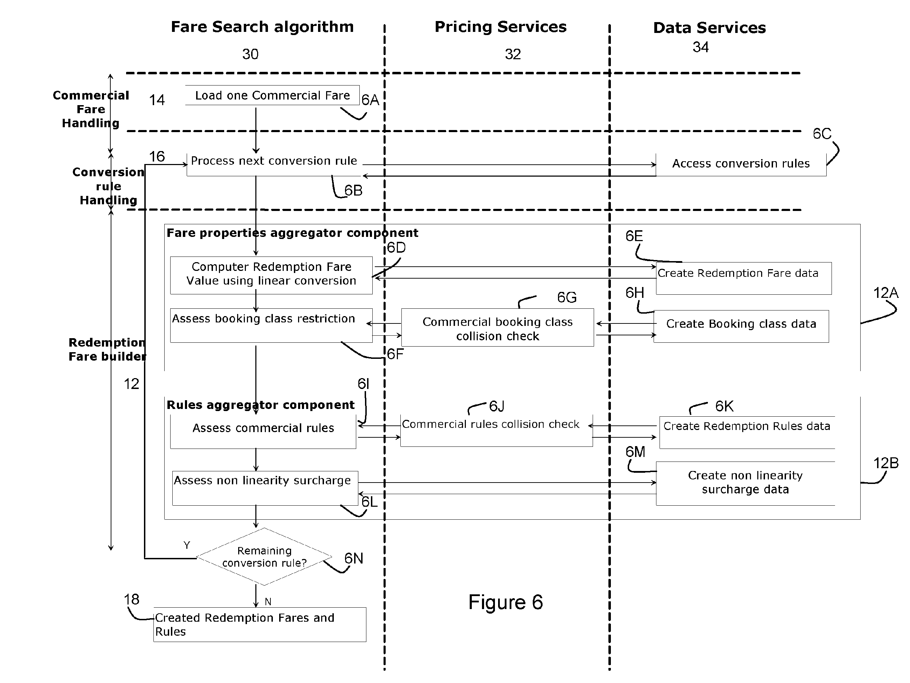

The diagram depicted in Figure 6 shows the process flow during the creation of Redemption fares and rules 18 using the Redemption Fare Builder 12 and its two components: the Fare properties aggregator component 12A and the Rules aggregator component 12B. The process flows can be broken down into the handling of the commercial fares 14 and the handling of the conversion rules 16 by a Fare Search algorithm 30, a Pricing Services module 32 and a Data Services module 34.

At 6A one commercial fare is loaded (from Data Service module 34) to the fare search algorithm 30, and at 6B the fare search algorithm 30 processes a next one of the N conversion rules in conjunction with an access to the conversion rules 16 by the Data Service module 34 (block 6C). Blocks 6D through 6H depict the operation of the Fare properties aggregator component 12A, while blocks 6I through 6M depict the operation of the Rules aggregator component 12B. More specifically, at 6D the Fare properties aggregator component 12A, in conjunction with the fare search algorithm 30, computes a Redemption Fare Value using a conversion formula 16B, more specifically a linear conversion, thereby creating Redemption Fare data in conjunction with the Data Services 34 at block 6E. At 6F the Fare Search algorithm 30 assesses a booking class restriction in conjunction with a commercial fare booking class collision check performed by the Pricing Services Modules 32. The result is the creation of Booking Class data in conjunction with the Data Services 34 at block 6H. The Rules Aggregator component 12B then operates to assess the commercial rules 14B in conjunction with a commercial rules collision check performed by the Pricing Services module 32 (blocks 6I, 6J) and creates Redemption Rules data in conjunction with the Data Services 34 at block 6K. In block 6L the Rules Aggregator component 12B operates to assess a non-linearity surcharge and creates at block 6M the non-linearity surcharge data in conjunction with the Data Services 34. An example of the non-linearity surcharge is shown in Figure 5A.

With regard to the foregoing discussion of Figure 6, the Pricing Services Modules 32 can be considered as software components implementing specific functionalities involved in itinerary pricing. Newly defined Pricing Services Modules 32 in accordance with the exemplary embodiments of this invention are the commercial booking class collision check 6G and the commercial rules collision check 6J. The operation of these two Pricing Services Modules is intended to avoid the generation by the Redemption Fare Builder of inapplicable redemption fares and rules.

The booking class collision check 6G is performed by comparing the booking class of a commercial fare against the booking class restriction of a cash to miles conversion rule. If the two booking class information are not compatible, then there is no point in creating redemption fare by combining this commercial fare and this conversion rule.

The rules collision check 6J is performed by comparing the commercial rules associated with a commercial fare and the eligibility rules associated with a cash to miles conversion rule. If for at least one type of criteria (e.g. travel dates), both restrictions are not compatible, then there is no point in creating redemption rules by combining these commercial rules and the cash to miles conversion rule.

At block 6N a test is made to determine if another of the N conversion rules 16 remains. If the determination is affirmative the process returns to block 6B the process the next remaining conversion rule 16, otherwise the process terminates with the created Redemption Fares and Rules 18.

It can be noted that the process flow can be modified to include an optional decision step between blocks 6A and 6B to determine if the loaded fare is a commercial fare. If yes then the flow continues to block 6B otherwise, if not a commercial fare, the flow terminates with the created Redemption Fares and Rules 18.

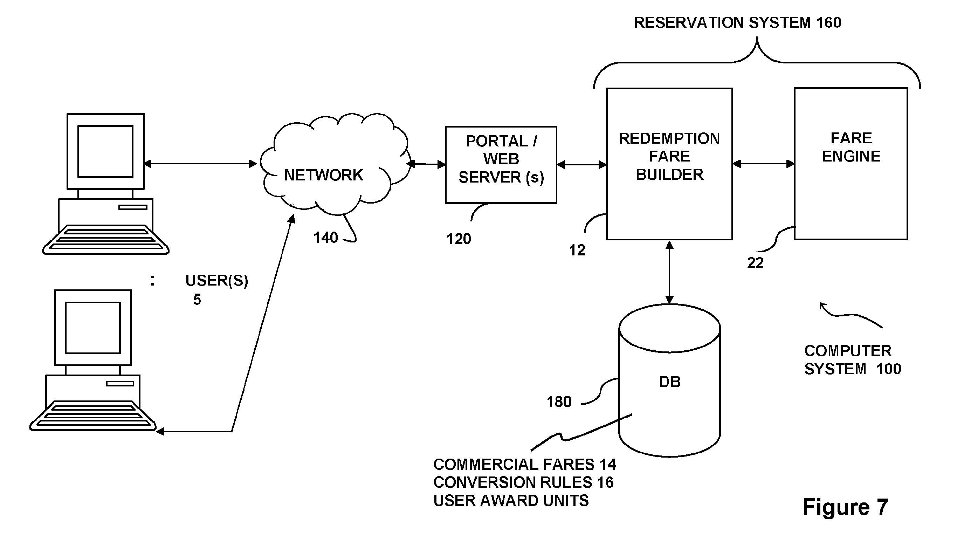

Figure 7 shows a simplified system-level block diagram of various components that are suitable for implementing the exemplary embodiments of this invention. In Figure 7 a computer system 100 includes a portal 120 to a network 140 (e.g., the Internet) whereby users 5 can make booking/reservation inquiries. For a case of an on-line reservation system the portal 140 can include at least one web server. Connected/coupled with the portal 120 is a reservation system 160 having an associated reservation memory/database (DB) 180. The DB 180 can be considered to store, in addition to other needed data, at least the commercial fares data 14, the conversion rules data 16, and a record of user customer loyalty award units (i.e., miles or points). The DB 180 can be considered to form a part of the Data Services 34 shown in Figure 6. In practice the DB 180 could be implemented using a plurality of data storage systems and databases that are geographically distributed. The reservation system 160 can also be considered to include the Redemption Fare Builder component/module 12, as well as the faring engine 22. The Redemption Fare Builder component/module 12 and the faring engine 22 can each be implemented using one or more suitable computer hardware/software platforms, and can be embodied as servers containing one or more data processors and associated memory storing computer software and data. The system 100 may be associated with, for example, a particular passenger airline, or it can be associated in whole or in part with an organization that handles travel inquiries and booking reservations for the passenger airline, and typically other airlines as well.

The reservation system 160 is assumed to have access to information by which the current fares charged for travel segments and groups of travel segments can be determined, changed as needed and quoted to the users 5, as well as to the data that defines the user award program units (miles, points). The reservation system 160 can respond, as described above, to user inquiries to redeem accumulated award units, convert cash to award units if needed, and book travel reservations using redeemed award units.

By way of a summation, it was noted previously that according to current practice there are two fully separate techniques for the redemption of miles (points). The first technique is based on special fares referred to as "redemption fares". These correspond to fares dedicated for use during the redemption process. The redemption fares have a value in points. The second technique is based on a conventional fare quoting method (i.e., it uses a conventional fare quote engine and conventional commercial fares) and simply converts into points the monetary amount obtained at the end of the process.

However, these two techniques are basically incompatible. In the first technique the fare quote engine works with points, while in the second technique the fare quote engine works with a monetary amount. Using these techniques is time consuming since two requests are to be built by the user and two separate pages of results are to be displayed and analyzed. In addition, there is no guarantee that the travel solutions separately returned are the best.

By way of example, if the customer wishes to use his or her miles for a round trip journey, and assuming that no redemption fare is available for the outbound date, the customer will not receive any solutions from the system based on redemption fares. The customer will obtain solutions from the system using conventional fares with an output monetary value converted into points. Some better solutions may thus have been missed if, for example, good redemption fares exist for the inbound date.

The exemplary embodiments of this invention solve this and other problems with a system that is based at least in part on a combination of the two systems. In the system in accordance with the exemplary embodiments of this invention conventional commercial fares are converted into redemption fares (which can then be referred to as converted redemption fares) at an early stage of the process. A single faring engine (the faring engine 22 of Figure 2) can then used to process the redemption fares (converted redemption fares) such that the output of the system contains travel solutions calculated in points.

The exemplary embodiments also pertain to a process for converting conventional fares into converted redemption fares. Conversion rules are used so that one conventional fare can result in N redemption fares provided that N conversion rules are used.

The exemplary embodiments also pertain to a process for converting between a monetary value and points (which is typically non-linear), where the process is transformed into a linear conversion formula plus a surcharge depending on the non-linear original function.

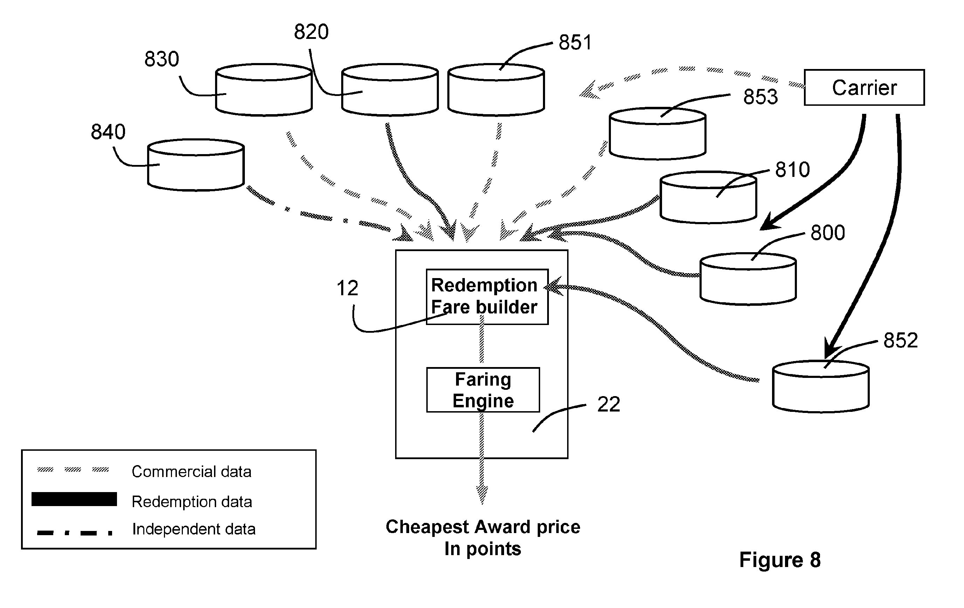

In the exemplary embodiment shown in Figure 8, a unified system is depicted in which the Redemption Fare Builder 12 receives various data in input and outputs data feeding the faring engine 22. The faring engine 22 may be a low fare search engine so as to return lowest fare - or "cheapest" - solutions which here means involving a minimal quantity of points. The faring engine 22 and the redemption fare builder 12 can be. as non-limiting examples, hardware and/or software components of a single system based on a server framework.

Data received at the redemption fare builder 12 preferably includes:

- commercial fares obtained, by way of example, from at least on database 851 of commercial fare definitions and from at least one database 853 of fare rules. The data may be provided by a carrier system;
- conversion rules 16 possibly obtained from at least one database 852 which may be fed by the carrier system;
- redemption fares obtained in the depicted embodiment, from at least a database 800 of redemption fares definitions and from at least a database 810 of redemption fare rules. These data may also be provided by the carrier;
- flight schedules definition specifying travel routes between origins and, in the example, obtained from at least one database 840; and
- availability data giving information as to the availability level (e.g. no availability, some availabilities or number of available seats) of travel solutions. In the exemplary embodiment shown in figure 8, at least one database 830 is provided for commercial availability data (availability information as to the travel solutions involving commercial fares).

Although redemption fares and commercial fares are very different, the Faring engine 22 is capable of processing both kinds of fares by means of converted redemption fares of the same data structure than the redemption fares which are originally defined with the redemption fare format.

There are number of advantages and technical effects that can be achieved by the use of the exemplary embodiments of this invention. For example, the use of the exemplary embodiments provides a method for implementing an award redemption method that outputs an accurate and lowest cost redemption recommendation without duplicated storage/processing of various data and data structures. The method can be used consistently across a wide variety of sales channels, and it can be integrated into existing sales flows (e.g., shopping, pricing and changes).

The foregoing description has provided by way of exemplary and non-limiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent algorithms, naming conventions and variations in the process flow and ordering of the process flow may be attempted by those skilled in the art. However, all such and similar modifications of the teachings of this invention will still fall within the scope of the embodiments of this invention.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

**Claims**

1. A computer-implemented method, comprising:

   - processing data representing at least one commercial fare in conjunction with data representing at least one conversion rule so as to generate at least one converted redemption fare; and
   - operating on the at least one converted redemption fare with a faring engine to output at least one travel solution calculated in award units.

2. The computer-implemented method of claim 1, where processing data is performed iteratively for one commercial fare and a plurality N of different conversion rules to generate N converted redemption fares, where N is an integer greater than one.

3. The computer-implemented method of claim 1, where processing data comprises operating a redemption fare builder component.

4. The computer-implemented method of claim 3, where operating the redemption fare builder component comprises operating a fare properties aggregator component and comprises:

   - receiving as input commercial fare properties and a conversion formula comprising a function to convert a monetary amount to award units; and
   - outputting from the fare properties aggregator component, as part of the converted redemption fare, data representing redemption fare properties;
   and where operating the redemption fare builder component further comprises operating a rules aggregator component and comprises:
   - receiving as input commercial rules applicable to the commercial fare properties and data representing conversion eligibility; and
   - outputting from the rules aggregator component, as part of the converted redemption fare, data representing redemption rules.

5. The computer-implemented method of claim 4, where the commercial fare properties comprise at least a fare amount, a city pair, a fare class and a booking class, and where the redemption fare properties comprise at least the fare amount converted to award units in accordance with the conversion formula, the city pair, the fare class and the booking class.

6. The computer-implemented method of claim 5, where the redemption rules associated with the commercial fare properties comprise at least a travel date and time, a flight number and a surcharge that comprises a non-linear surcharge component.

7. The computer implemented method as in claim 6, where the conversion rule is modeled as a sum of a linear conversion and the non-linear surcharge component.

8. The computer implemented method as in claim 4, where operating the fare properties aggregator component comprises performing a booking class collision check to verify compatibility between a booking class of a commercial fare a booking class restriction of the at least one conversion rule, and where operating the rules aggregator component comprises performing a booking class collision check to verify compatibility between commercial rules associated with a commercial fare and eligibility rules associated with the at least one conversion rule.

9. The computer implemented method as in any one of the preceding claims wherein the step of operating on the at least one converted redemption fare comprises operating both on the at least one converted redemption fare and at least one redemption fare obtained from a repository of redemption fares.

10. The computer implemented method as in any one of the preceding claims wherein the steps of processing data representing at least one commercial fare and operating on the at least one converted redemption fare are performed in response to a request to redeem award units for a customer.

11. The computer implemented method as in any one of the preceding claims, wherein execution of the method provides a unified award purchase flow that comprises both converted redemption fares and converted commercial fares.

12. A non-transitory computer-readable medium that contains software program instructions, where execution of the software program instructions by at least one data processor results in performance of operations that comprise execution of the method as in any one of claims 1-11.

13. A data processing system comprising:

   - at least one data processor;
   - at least one memory connected with the data processor and storing computer software that is executable by the at least one data processor to cause the data processor to operate a redemption fare builder component to process data representing at least one commercial fare in conjunction with data representing at least one conversion rule so as to generate at least one converted redemption fare, and to operate a faring engine on the at least one converted redemption fare to output at least one travel solution calculated in award units.

14. The data processing system of claim 13, where the data is processed iteratively for one commercial fare and a plurality N of different conversion rules to generate N converted redemption fares, where N is an integer greater than one.

15. The data processing system of claim 13, where operating the redemption fare builder component comprises operating a fare properties aggregator component and comprises:

- receiving as input commercial fare properties and a conversion formula comprising a function to convert a monetary amount to award units; and
- outputting from the fare properties aggregator component, as part of the converted redemption fare, data representing redemption fare properties; and where operating the redemption fare builder component further comprises operating a rules aggregator component and comprises:
- receiving as input commercial rules applicable to the commercial fare properties and data representing conversion eligibility; and
- outputting from the rules aggregator component, as part of the converted redemption fare, data representing redemption rules.

16. The data processing system of claim 15, where the commercial fare properties comprise at least a fare amount, a city pair, a fare class and a booking class, and where the redemption fare properties comprise at least the fare amount converted to award units in accordance with the conversion formula, the city pair, the fare class and the booking class, where the redemption rules associated with the commercial fare properties comprise at least a travel date and time, a flight number and a surcharge that comprises a non-linear surcharge component, and where the conversion rule is modeled as a sum of a linear conversion and the non-linear surcharge component.

17. The data processing system of claim 15, where operating the fare properties aggregator component comprises performing a booking class collision check to verify compatibility between a booking class of a commercial fare a booking class restriction of the at least one conversion rule, and where operating the rules aggregator component comprises performing a booking class collision check to verify compatibility between commercial rules associated with a commercial fare and eligibility rules associated with the at least one conversion rule.

18. The data processing system as in any one of claims 13-17, where operating on the at least one converted redemption fare comprises operating both on the at least one converted redemption fare and at least one redemption fare obtained from a database that stores redemption fares.

19. The data processing system as in any one of claims 13-18, where processing data representing at least one commercial fare and operating on the at least one converted redemption fare are performed in response to a request to redeem award units for a customer.

20. The data processing system as in any one of claims 13-19, where said system provides a unified award purchase flow that comprises both converted redemption fares and converted commercial fares.

Carrier

INDEPENDENT DATA

Flight DB

Redemption Availability DB

ATPCo Farexpert

Redemption fares filed in points

Redemption fare rules

FARE SEARCH ENGINE

Universal Faring Engine (Award Shopper ATC Award)

Fare Search Engine

Cheapest Award price in points

**Figure 1A**

EP 2 541 482 A1

Figure 1B

EP 2 541 482 A1

20 — Upstream Conversion Process

18 — Standardized Redemption Fares and Rules

12 — Redemption Fare Builder

14 — Commercial Fares

16 — Conversion Rules

22 — Faring Engine

10 System

Figure 2

Figure 3

**14** — Commercial Fare

**14A** — Fare properties
Amount
City Pair
Fare class
Booking class

**14B** — Commercial Rules
Travel Date & time
Advance purchase
Flight
Passenger
Sales restriction
Surcharge

**16** — Cash to mile rule

**16A** — Conversion Eligibility
Office ID
Distribution Channel
Special Offer
O & D
Booking class
Fare class
Tier Level
Passenger type
Travel date & time
Advance purchase

**16B** — Conversion formula
Any function from cash to mile
Possibly non linear

**12** — Redemption Fare Builder

**12A** Fare properties aggregator component

**12B** Rule aggregator component

**18** — Redemption Fare

**18A** — Redemption Fare Properties
Amount converted in point
City Pair
Fare class
Booking class

**18B** — Redemption Rules
Travel Date & time
Advance purchase
Flight
Passenger
Sales restriction
Surcharge, including non linearity surcharge

EP 2 541 482 A1

14

- **1 Commercial Fare**

Commercial Fare

Fare properties
EUR 200
NCE→LON
YRT

Commercial Rules
Any date
Any Flight

14

- **N conversion rules**

Conversion rule

Conversion eligibility
1 month before departure

Conversion formula
EUR 1 = 100 Points

...

Conversion rule

Conversion eligibility
1 month before departure

Conversion formula
EUR 1 = 150 Points

16

- **N Redemption Fares**

Redemption Fare

Fare Properties
Pt 20000
NCE→ LON

Redemption Rules
1 month before
departure
Any flight

...

Redemption Fare

Fare Properties
Pt 30000
NCE/LON

Redemption Rules
1 week before
departure
Any flight

18

**Figure 4**

Figure 5A

FIGURE 5B

FIGURE 5C

Figure 6

Figure 7

Figure 8

Europäisches
Patentamt

European
Patent Office

Office européen
des brevets

**EUROPEAN SEARCH REPORT**

Application Number

EP 11 30 5819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/053052 A1 (BAGGETT DAVID M [US] ET AL) 9 March 2006 (2006-03-09)<br>* abstract *<br>* paragraphs [0004] - [0010] *<br>* paragraphs [0017] - [0030]; figures 1-2 * | 1-20 | INV.<br>G06Q30/00 |

-----

TECHNICAL FIELDS
SEARCHED      (IPC)

G06Q

The present search report has been drawn up for all claims

| Place of search | Date of completion of the search | Examiner |
|---|---|---|
| Munich | 2 November 2011 | Dedek, Frédéric |

## ANNEX TO THE EUROPEAN SEARCH REPORT
## ON EUROPEAN PATENT APPLICATION NO.

EP 11 30 5819

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2011

| Patent document cited in search report | Publication date | Patent family member(s) | Publication date |
|---|---|---|---|
| US 2006053052    A1 | 09-03-2006 | EP        1787229  A2<br>WO    2006031552  A2 | 23-05-2007<br>23-03-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060053052 A1
- US 20060053053 A1
- US 20060053054 A1
- US 20060053054 A
- US 20060053052 A